# EUROPEAN PATENT SPECIFICATION

(11) **EP 3 305 551 B1**
(45) Date of publication and mention of the grant of the patent: **18.09.2019**
(21) Application number: 16799756.8
(22) Date of filing: 27.04.2016
(51) Int. Cl.: B60C 9/20, B60C 9/18, B60C 9/26

(54) **REINFORCEMENT MEMBER FOR TIRES, AND TIRE USING SAME**
VERSTÄRKUNGSELEMENT FÜR REIFEN UND REIFEN MIT VERWENDUNG DAVON
ÉLÉMENT DE RENFORCEMENT POUR PNEUMATIQUE, ET PNEUMATIQUE METTANT EN UVRE CELUI-CI

(30) Priority: 25.05.2015 JP 2015105787
(43) Date of publication of application: 11.04.2018
(73) Proprietor: Bridgestone Corporation, Tokyo 104-8340 (JP)
(72) Inventor: MIYAZONO Toshiya, Tokyo 104-8340 (JP)
(74) Representative: Oxley, Robin John George
(86) International application number: PCT/JP2016/063281
(87) International publication number: WO 2016/190048

(56) References cited:
- JP-A- S 476 351
- JP-A- 2000 052 712
- JP-A- 2000 108 611

## Description

### TECHNICAL FIELD

The present invention relates to a tire reinforcement member (hereinafter, also simply referred to as "reinforcement member"), and a tire comprising the same.

### BACKGROUND ART

A variety of studies have been conducted on tire reinforcement members. For example, as the structure of a belt used as a reinforcement member of a tire for passenger vehicles, a structure in which two or more intersecting belt layers whose reinforcing cord directions intersect with each other are arranged on the tire radial direction outer side of a carcass serving as a skeleton member in a crown portion is commonly adopted. In addition, for example, a tire reinforcement member formed by winding a rubber strip obtained by rubber-coating one reinforcing cord or a plurality of paralleled reinforcing cords at an inclination with respect to the longitudinal direction of the member without any gaps while folding back the rubber strip at width direction ends of the member is known.

As for a tire reinforcement member having such a structure, for example, Patent Document 1 discloses a pneumatic radial tire in which, on the outer circumference of a carcass layer of a tread portion, at least three sets of rubberized cord groups, each set consisting of 3 to 10 adjacent rubberized reinforcing cords, are continuously wound at an inclination with respect to the tire circumferential direction while being folded back in shoulder parts; a belt layer formed in a flat loop shape or a flat S- or Z-shape in the tire widthwise cross-sectional plane is embedded; and spliced portions constituted by winding start ends and winding finish ends of the at least three sets of rubberized cord groups are positioned on the tire width direction inner side than the belt layer ends and dispersed in the tire circumferential direction.

### RELATED ART DOCUMENT

### PATENT DOCUMENT

Patent Document 1: Japanese Unexamined Patent Application Publication No. 2000-33805 (Claims, etc.). Attention is also drawn to the disclosure of JP2000-108611.

### SUMMARY OF THE INVENTION

### PROBLEMS TO BE SOLVED BY THE INVENTION

However, when such a conventional tire reinforcement member as described above, which is formed by winding a rubber strip at an inclination with respect to the longitudinal direction of the member while folding back the rubber strip at width direction ends of the member, is used in a tire, there is a problem that defects originating from the folded parts occur, making the durability insufficient.

Therefore, an object of the present invention is to provide a tire reinforcement member which solves the above-described problem and has an improved durability. Another object of the present invention is to provide a tire whose weight is reduced and durability is improved by using the tire reinforcement member.

### MEANS FOR SOLVING THE PROBLEMS

The present inventor intensively studied to discover that the above-described problem can be solved by adopting the following constitutions, thereby completing the present invention.

That is, the tire reinforcement member of the present invention is a tire reinforcement member formed by winding a rubber strip without any gaps at an inclination with respect to the longitudinal direction of the member while folding back the rubber strip at width direction ends of the member, the rubber strip being obtained by rubber-coating one reinforcing cord or a plurality of paralleled reinforcing cords, wherein
the rubber strip substantially forms two reinforcing layers having different inclination directions, and
at a folding part closest to a winding finish end of the rubber strip, the rubber strip is passed under an already wound rubber strip and then folded, the already wound rubber strip has been wound previous to the rubber strip in an inclination direction different from that of the rubber strip.

A tire of the present invention is characterized by comprising the above-described tire reinforcement member of the present invention. The tire of the present invention is useful as a tire for passenger vehicles, a tire for trucks and busses, and a tire for construction vehicles.

### EFFECTS OF THE INVENTION

According to the present invention, a tire reinforcement member having an improved durability can be realized. In addition, by using the tire reinforcement member, a tire whose weight is reduced and durability is improved can be realized.

### BRIEF DESCRIPTION OF THE DRAWINGS

FIG. 1 is an explanatory drawing illustrating one example of a tire reinforcement member of the present invention.
FIG. 2 is an explanatory drawing illustrating a tire reinforcement member of the present invention in a state before winding a rubber strip for the last lap.
FIG. 3 is an explanatory drawing illustrating a conventional tire reinforcement member.
FIG. 4 is a tire widthwise cross-sectional view illustrating one example of a constitution of a tire for passenger vehicles.
FIG. 5 is a tire widthwise partial cross-sectional view illustrating one example of a constitution of a tire for passenger vehicles according to the present invention.
FIG. 6 is a tire widthwise cross-sectional view illustrating one example of a constitution of a tire for trucks and busses.
FIG. 7 is a tire widthwise partial cross-sectional view illustrating one example of a constitution of a tire for trucks and busses according to the present invention.
FIG. 8 is a tire widthwise cross-sectional view illustrating one example of a constitution of a tire for construction vehicles.
FIG. 9 is a tire widthwise partial cross-sectional view illustrating one example of a constitution of a tire for construction vehicles according to the present invention.

### MODE FOR CARRYING OUT THE INVENTION

Embodiments of the present invention will now be described in detail referring to the drawings.

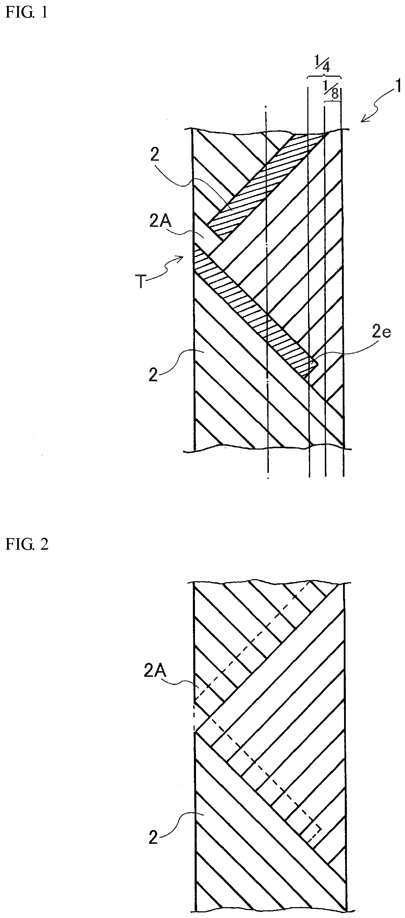

FIG. 1 is an explanatory drawing illustrating one example of a tire reinforcement member of the present invention. As illustrated, the tire reinforcement member 1 of the present invention is formed by winding a rubber strip 2 obtained by rubber-coating one reinforcing cord or a plurality of paralleled reinforcing cords at an inclination with respect to the longitudinal direction of the member without any gaps while folding back the rubber strip at width direction ends of the member. In the tire reinforcement member 1 of the present invention, the rubber strip 2 substantially forms two reinforcing layers having different inclination directions.

FIG. 2 is an explanatory drawing illustrating a tire reinforcement member 1 of the present invention in a state before winding the rubber strip 2 for the last lap. The dotted line in FIG. 2 indicates the position where the rubber strip 2 is to be wound for the last lap. The shaded part in FIG. 1 indicates the part where the rubber strip 2 has been wound for the last lap. As illustrated in FIG. 1 and FIG. 2, in the tire reinforcement member 1 of the present invention, the last lap of the rubber strip 2 is made by winding the rubber strip 2 such that, in a folding part T closest to a winding finish end 2e of the rubber strip 2, the rubber strip 2 is passed under an already wound rubber strip 2A and then folded, the already wound rubber strip 2A has been wound previous to the rubber strip 2 in an inclination direction different from that of the rubber strip 2. The reason why this constitution enables to inhibit the occurrence of a defect originating from the folded part and to thereby improve the durability is as follows.

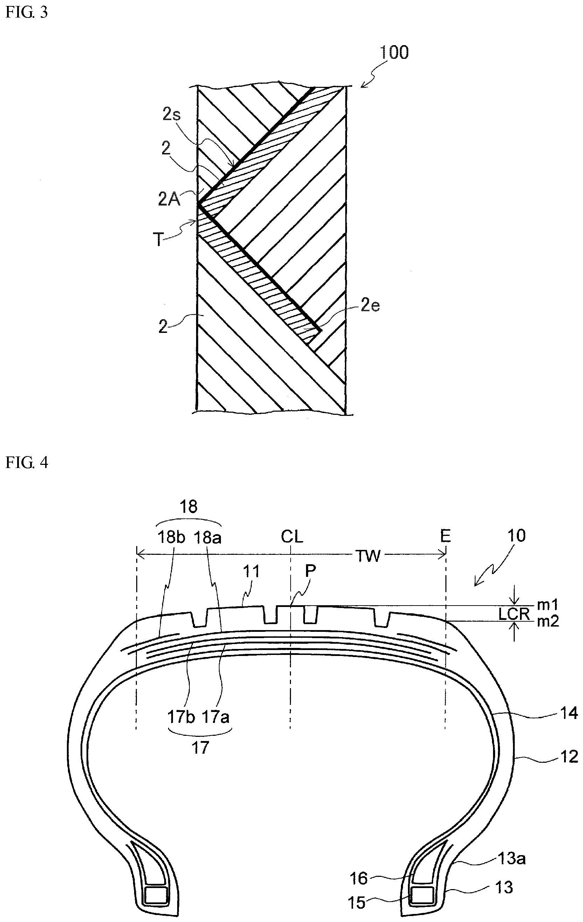

FIG. 3 is an explanatory drawing illustrating a conventional tire reinforcement member 100 in which the rubber strip 2 is folded at the folding part T closest to the winding finish end 2e of the rubber strip 2 without being passed under the already wound rubber strip 2A which has been wound previous to the rubber strip 2 in an inclination direction different from that of the rubber strip 2. In this case, in the folding part T closest to the winding finish end 2e of the rubber strip 2, the rubber strip 2 is laminated on the already wound rubber strip 2A which has been wound previous to that rubber strip 2 in an inclination direction different from that of the rubber strip 2, substantially on the already wound rubber strip 2A closest to a winding start end and initially folded. Thus, the reinforcing cords in the part indicated by a thick line, which are embedded in the width direction edge 2s on the trailing side of the winding direction of the rubber strip 2 that is indicated by the shaded part and lastly folded, are bent within the same plane at the folding part T, that is, the folding part T comprises a cord portion along the longitudinal direction of the member. Therefore, when this reinforcement member is applied to a tire, it is believed that tensile strain in the tire circumferential direction, generated in the width direction edge of the reinforcement member due to an inner pressure or rolling of the tire, allows the reinforcing cords to exert cord rigidity, as a result of which strain is concentrated on the reinforcing cords and the reinforcing cords are thus broken by repeated input in the early stage, causing the tire to be destructed. When the rubber strip 2 is composed of a plurality of paralleled reinforcing cords, since those reinforcing cords other than the ones embedded in the width direction edge 2s on the trailing side of the winding direction of the rubber strip 2 are all folded at the folding part T, that is, bent also in the thickness direction of the member, the folding part T has no cord portions along the longitudinal direction of the member. Therefore, for these reinforcing cords, even when a circumferential tensile strain is generated in the width direction edge of the member, no strain is generated in the reinforcing cords because of the elongation of the rubber between the reinforcing cords.

In contrast, in the reinforcement member 1 of the present invention, since the rubber strip 2 is passed under the already wound rubber strip 2A and then folded at the folding part T closest to the winding finish end 2e of the rubber strip 2, all of the reinforcing cords in the rubber strip 2 are folded at the folding part T and bent in the thickness direction of the member as well, there is no cord portions along the longitudinal direction of the member. Therefore, when this reinforcement member is applied to a tire, since concentration of strain does not occur, destruction of the tire caused by early breakage of the reinforcing cords can be inhibited.

The reinforcement member 1 of the present invention may take any constitution as long as the rubber strip 2 is passed under the already wound rubber strip 2A and then folded at the folding part T closest to the winding finish end 2e of the rubber strip 2, the already wound rubber strip 2A has been wound previous to the rubber strip 2 in an inclination direction different from that of the rubber strip 2. This constitution enables to attain the expected effects of the present invention, and other constitutions are not particularly restricted.

In the reinforcement member 1 of the present invention, it is preferred that, in the width direction of the member, the winding finish end 2e of the rubber strip 2 be positioned at 1/8 to 1/4 of the member width away from a width direction end of the reinforcement member 1. When the winding finish end 2e of the rubber strip 2 exists in the vicinity of a width direction end of the reinforcement member 1 or in the vicinity of the width direction center of the reinforcement member 1, the reinforcement member 1 expands along the radial direction in the ground contact surface during rolling in the former case or at the time of applying an internal pressure in the latter case, which is not preferred.

Examples of the reinforcing cords used for the rubber strip 2 in the reinforcement member 1 of the present invention include organic fiber cords that are composed of aromatic polyamide fibers (e.g., trade name "Kevlar®"), polyketone (PK) fibers, or carbon fibers. Thereamong, examples of carbon fiber cords include those composed of polyacrylonitrile (PAN)-based carbon fibers, pitch-based carbon fibers, or rayon-based carbon fibers. It is preferred that the organic fiber cords be subjected to an adhesive treatment so as to improve the adhesion with rubber. This adhesive treatment can be performed in accordance with a conventional method.

In cases where the rubber strip 2 constituting the reinforcement member 1 of the present invention is obtained by rubber-coating a plurality of paralleled reinforcing cords, the number of the reinforcing cords may be, for example, 2 to 20, preferably 5 to 10. Further, the end count of the reinforcing cords in the reinforcement member 1 of the present invention can be generally 10 to 120 cords/50 mm; however, the end count is not restricted to this range. Moreover, the inclination angle of the rubber strip 2 can be ±10° to 60°, preferably ±15° to 45°, with respect to the longitudinal direction of the member.

The reinforcement member 1 of the present invention can be suitably used as a reinforcement member of various tires, such as a tire for passenger vehicles, a tire for trucks and busses, a tire for construction vehicles, a tire for two-wheeled vehicles, a tire for airplanes, and a tire for agriculture. Further, the tire is not restricted to be a pneumatic tire, and the reinforcement member 1 can also be used as a reinforcement member of a solid tire or a non-pneumatic tire. The part to which the reinforcement member 1 of the present invention is applied is not particularly restricted. For example, the reinforcement member 1 of the present invention is preferably applied as a belt that covers the majority of the tread portion. By applying the reinforcement member 1 of the present invention as a belt, the tire durability can be improved while reducing the tire weight.

In addition to the use as a belt, for example, the reinforcement member 1 of the present invention may also be used only for local reinforcement of a part of the tread. The reinforcement member 1 of the present invention can be used only for local reinforcement of, for example, the vicinity of the tread ends, the vicinity of the equatorial plane, the vicinity of the groove bottom or, when other inclined belt layer and circumferential cord layer are incorporated, the ends of such layers. The reinforcement member of the present invention may be used alone, or a plurality of the reinforcement members may be arranged side by side along the tire width direction or configured to cover the tread portion by winding the reinforcement members in the circumferential direction while shifting them from one another in the tire width direction and folding back.

A rubber composition used for coating the reinforcing cords is not particularly restricted. For example, as a rubber contained in the rubber composition used as a coating rubber, any known rubber can be used, and examples thereof include natural rubbers, and synthetic rubbers such as vinyl aromatic hydrocarbon-conjugated diene copolymers, polyisoprene rubber, butadiene rubber, butyl rubber, halogenated butyl rubber, and ethylene-propylene rubber. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which comprises a natural rubber in an amount of not less than 50% by mass and in which the remainder is a synthetic rubber.

In the rubber composition, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine and hexamethylene methylmelamine), vulcanization accelerators, vulcanization aids and age resistors, can be incorporated as appropriate in an ordinary amount. The method of preparing the rubber composition is not particularly restricted and, for example, the above-described compounds or a mixture thereof, sulfur, an organic acid cobalt salt and various additives can be kneaded into a rubber component using a Banbury mixer, a roll or the like.

Next, the tire of the present invention will be described.

The tire of the present invention comprises the reinforcement member 1 of the present invention, and examples thereof include tires for passenger vehicles, trucks and busses, construction vehicles, two-wheeled vehicles, airplanes, or agriculture. The tire of the present invention is preferably a tire for passenger vehicles, a tire for trucks and busses, or a tire for construction vehicles. The tire of the present invention is not restricted to a pneumatic tire and may be used as a solid tire or a non-pneumatic tire.

The part to which the reinforcement member 1 of the present invention is applied is not particularly restricted and, as described above, for example, the reinforcement member 1 of the present invention is suitable as a belt that covers the majority of the tread portion. By using the reinforcement member 1 of the present invention as a belt, the tire durability can be improved while reducing the tire weight. In addition, for example, the reinforcement member 1 of the present invention may also be used only for local reinforcement of a part of the tread. The reinforcement member 1 of the present invention can be used only for local reinforcement of, for example, the vicinity of the tread ends, the vicinity of the equatorial plane or, when other inclined belt layer and circumferential cord layer are incorporated, the ends of such layers. The reinforcement member 1 may be used alone, or a plurality of the reinforcement members 1 may be arranged side by side along the tire width direction or configured to cover the tread portion by winding the reinforcement members 1 in the circumferential direction while shifting them from one another in the tire width direction and folding back.

FIG. 4 is a tire widthwise cross-sectional view illustrating one example of a constitution of a tire for passenger vehicles. The illustrated tire for passenger vehicles 10 comprises: a tread portion 11 forming a ground contact part; a pair of side wall portions 12 continuously extending inward in the tire radial direction on both sides of the tread portion 11; and bead portions 13 continuously extending on the circumferential inner side of each side wall portion 12. The tread portion 11, the side wall portions 12 and the bead portions 13 are reinforced by a carcass 14 composed of a single carcass ply toroidally extending from one bead portion 13 to the other bead portion 13. In the illustrated tire for passenger vehicles 10, bead cores 15 are each embedded in the pair of the bead portions 13, and the carcass 14 is folded around the bead cores 15 from the inside to the outside of the tire and thereby anchored.

In the tire for passenger vehicles 10 of the present invention, a variety of constitutions including conventional structures can be adopted for the carcass 14, and the carcass 14 may have a radial structure or a bias structure. The carcass 14 is preferably constituted by one or two carcass plys each composed of an organic fiber cord layer. Further, the carcass 14 may have its maximum width positions in the tire radial direction on either side closer to each bead portion 13 or closer to the tread portion 11. For example, the maximum width positions of the carcass 14 can be arranged in a range of 50% to 90% from the bead base on the tire radial direction outer side with respect to the tire height. Moreover, as illustrated, the carcass 14 generally and preferably has a structure in which the carcass 14 extends between the pair of the bead cores 15 without interruption; however, the carcass 14 can also be constituted by a pair of carcass ply pieces extending from the respective bead cores 15 and being interrupted in the vicinity of the tread portion 11 (not illustrated).

A variety of structures can be adopted for the folded parts of the carcass 14. For example, the folded ends of the carcass 14 can be positioned on the tire radial direction inner side than the upper ends of bead fillers 16, and the folded ends of the carcass 14 may extend further on the tire radial direction outer side than the upper ends of the bead fillers 16 or the tire maximum width positions. In this case, the folded ends of the carcass 14 may also extend to the tire width direction inner side than the tire width direction ends of a belt 17. Further, in cases where plural carcass plys are arranged, the positions of the folded ends of the carcass 14 in the tire radial direction may be different from each other. Alternatively, the carcass 14 can also take a structure in which the carcass 14 is sandwiched by plural bead core members in the absence of the folded parts, or a structure in which the carcass 14 is wound around the bead cores 15. The end count of the carcass 14 is generally in a range of 10 to 80 cords/50 mm; however, the end count is not restricted thereto.

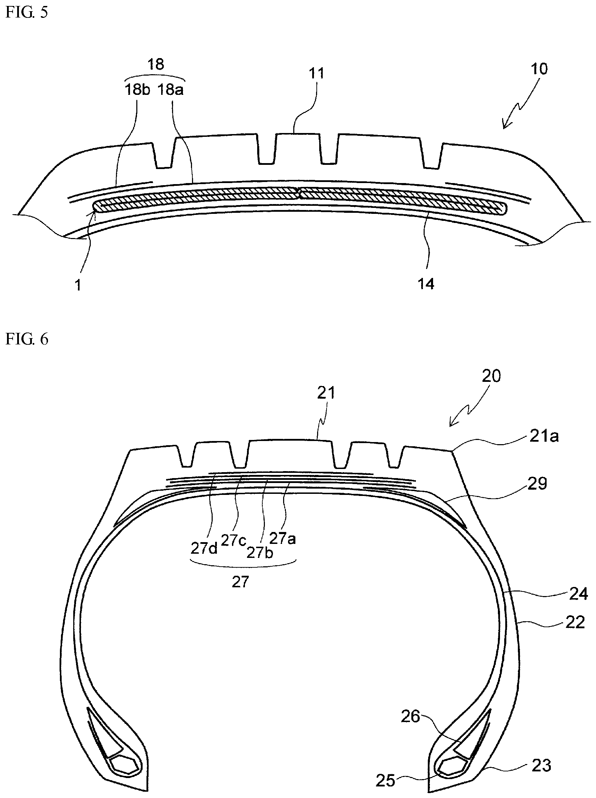

In the illustrated tire for passenger vehicles 10, the belt 17 composed of two belt layers 17a and 17b is arranged on the tire radial direction outer side of the carcass 14 in the crown region. In the present invention, the reinforcement member 1 can be arranged in place of the belt 17 composed of the two belt layers 17a and 17b. FIG. 5 is a tire widthwise partial cross-sectional view illustrating one example of a constitution of a tire for passenger vehicles according to the present invention. That is, in the tire of the present invention, two reinforcing layers according to the reinforcement member 1 of the present invention, in place of the two belt layers 17a and 17b, constitute intersecting belt layers in which cord layers each having a prescribed angle with respect to the tire circumferential direction intersect with each other between the layers.

The tire for passenger vehicles 10 of the present invention may further comprise other belt layers (not illustrated) in addition to the belt layers composed of the reinforcement member 1 of the present invention. Such other belt layers can be inclined belts, each composed of a rubberized layer of reinforcing cords, having a prescribed angle with respect to the tire circumferential direction. The other belt layers may be arranged on the tire radial direction outer side or inner side of the reinforcement member 1. As the reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, in cases where such other belt layers are arranged, the width of a maximum width inclined belt layer having the largest width is preferably 90% to 115%, particularly preferably 100% to 105%, of the tread width.

Further, in the tire for passenger vehicles 10 of the present invention, a circumferential cord layer (not illustrated) may also be arranged on the tire radial direction outer side of the reinforcement member 1 of the present invention and other belt layers.

In the tire for passenger vehicles according to the present invention, a belt reinforcing layer 18 may also be arranged on the tire radial direction outer side of the reinforcement member 1 of the present invention. Examples of the belt reinforcing layer 18 include a cap layer 18a arranged over the entire width or more of the reinforcement member 1, and a layered layer 18b arranged in the regions that cover both ends of the reinforcement member 1. The cap layer 18a and the layered layer 18b may each be arranged alone, or both of them may be arranged in combination. Further, two or more cap layers and/or two or more layered layers may be arranged in combination.

Various materials can be used as the reinforcing cords of the cap layer 18a and the layered layer 18b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting plural filaments together, or hybrid cords obtained by twisting filaments of different materials together can be used as well. Further, in order to increase the breaking strength, wavy cords may also be used as the reinforcing cords. Similarly, for example, high-elongation cords having an elongation at break of 4.5% to 5.5% may also be used to increase the breaking strength.

In cases where the cap layer 18a is arranged in the tire for passenger vehicles 10 of the present invention, the width of the cap layer 18a may be wider or narrower than those of the inclined belt layers. For example, the width of the cap layer 18a can be 90% to 110% of the width of the maximum width inclined belt layer having the largest width among the inclined belt layers. The end count of the cap layer and that of the layered layer are generally in a range of 20 to 80 cords/50 mm; however, the end counts are not restricted thereto. For example, the cap layer 18a may be imparted with distributions in the tire width direction in terms of rigidity, material, number of layers, cord density and the like and, for example, the number of layers can be increased only at the tire width direction ends, or only in the central part.

From the production standpoint, it is particularly advantageous to configure the cap layer 18a and the layered layer 18b as spiral layers. In this case, these layers may be formed by strip-form cords in which plural core wires arranged in parallel with each other in a plane are bundled together by a wrapping wire with the parallel arrangement being maintained.

In the case of the tire for passenger vehicles 10 of the present invention that has a narrow width and a large diameter, as the shape of the tread portion 11, at a tire widthwise cross-section, when a straight line parallel to the tire width direction running through a point (P) on the tread surface in the tire equatorial plane (CL) is defined as "m1", a straight line parallel to the tire width direction running through a ground contact end (E) is defined as "m2", the distance between the straight lines m1 and m2 in the tire radial direction is defined as fall height "LCR" and the tread width of the tire is defined as "TW", the ratio LCR/TW is preferably 0.045 or less. By controlling the ratio LCR/TW in this range, the crown portion of the tire is flattened (planarized), so that the ground contact area is increased and the input (pressure) from the road surface is thus relaxed, whereby the deflection rate in the tire radial direction can be reduced and the durability and wear resistance of the tire can be improved. Further, the tread ends are preferably smooth.

The tread pattern may be a full-lug pattern, a pattern mainly constituted by rib-like land portions, a block pattern or an asymmetrical pattern, and the tread pattern may have a designated rotation direction.

The full-lug pattern may be a pattern comprising widthwise grooves extending in the tire width direction from the vicinity of the equatorial plane to the ground contact ends and, in this case, the pattern is not required to have a circumferential groove. Such a pattern mainly constituted by lateral grooves is capable of effectively exerting on-snow performance in particular.

The pattern mainly constituted by rib-like land portions is a pattern mainly constituted by rib-like land portions partitioned in the tire width direction by at least one circumferential groove, or by circumferential grooves and tread ends. The term "rib-like land portions" used herein refers to land portions extending in the tire circumferential direction without any lateral groove across the tire width direction; however, the rib-like land portions may have sipes and lateral grooves terminating within each rib-like land portion. Since a radial tire has a high ground contact pressure particularly when used at a high internal pressure, it is believed that the ground contact performance on wet road is improved by increasing the circumferential shear rigidity. The pattern mainly constituted by rib-like land portions can be, for example, a tread pattern in which a region corresponding to 80% of the tread width centered on the equatorial plane consists of only rib-like land portions, that is, a pattern having no lateral groove. Such a pattern largely contributes to a drainage performance, particularly, to a wet performance in this region.

The block pattern is a pattern comprising block land portions partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and outer side in the vehicle mounting direction divided by the equatorial plane, and the tire may be configured to have different numbers of circumferential grooves between the tire halves on the inner side and outer side in the vehicle mounting direction divided by the equatorial plane.

The tread rubber is not particularly restricted, and any conventionally used rubber or a foamed rubber can be used. The tread rubber may be constituted by plural rubber layers different from each other in the tire radial direction, and the tread rubber may have, for example, a so-called cap-base structure. As the plural rubber layers, those different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers different from each other in the tire width direction, and the tread rubber may have a so-called divided tread structure. As the plural rubber layers, those different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the vicinity of the shoulder land portions or only the vicinity of the center land portions, may be constituted by a rubber layer(s) different from the surroundings.

In the tire for passenger vehicles 10 of the present invention, a known structure can be adopted also for the side wall portions 12. For example, the tire maximum width positions can be arranged in a range of 50% to 90% from the bead base on the tire radial direction outer side with respect to the tire height. Further, a structure comprising a rim guard may be adopted as well. In the tire for passenger vehicles 10 of the present invention, it is preferred that a recess 13a for connecting with a rim flange is formed.

Moreover, variety of structures, such as a circular shape or a polygonal shape, can be adopted for the bead cores 15. It is noted here that, as described above, the bead portions 13 may have a structure in which the carcass 14 is wound on the bead cores 15, or a structure in which the carcass 14 is sandwiched by plural bead core members. In the illustrated tire for passenger vehicles 10, bead fillers 16 are arranged on the tire radial direction outer side of the respective bead cores 15; however, the bead fillers 16 may be omitted in the tire for passenger vehicles 10 of the present invention.

In the tire for passenger vehicles of the present invention, usually, an inner liner may be arranged in the innermost layer of the tire, although it is not illustrated in the drawing. The inner liner may be constituted by a rubber layer mainly composed of butyl rubber, or a film layer comprising a resin as a main component. Further, although not illustrated in the drawing, a porous member may be arranged and an electrostatic flocking process may be performed on the tire inner surface in order to reduce cavity resonance noise. Moreover, on the tire inner surface, a sealant member for inhibition of air leakage upon puncture of the tire may be arranged as well.

The use of the tire for passenger vehicles 10 is not particularly restricted. The tire can be suitably used as a summer tire, an all-season tire, or a winter tire. It is also possible to use the tire for passenger vehicles 10 as a tire for passenger vehicles that has a special structure, such as a side-reinforced run-flat tire having a crescent-shaped reinforcing rubber layer in the side wall portions 12 or a studded tire.

Next, a tire for trucks and busses according to the present invention will be described.

FIG. 6 is a tire widthwise cross-sectional view illustrating one example of a constitution of a tire for trucks and busses. The illustrated tire for trucks and busses 20 comprises: a tread portion 21 forming a ground contact part; a pair of side wall portions 22 continuously extending inward in the tire radial direction on both sides of the tread portion 21; and bead portions 23 continuously extending on the circumferential inner side of each side wall portion 22. The tread portion 21, the side wall portions 22 and the bead portions 23 are reinforced by a carcass 24 composed of a single carcass ply toroidally extending from one bead portion 23 to the other bead portion 23. In the illustrated tire for trucks and busses 20, bead cores 25 are each embedded in the pair of the bead portions 23, and the carcass 24 is folded around the bead cores 25 from the inside to the outside of the tire and thereby anchored.

In the tire for trucks and busses 20 of the present invention, a variety of constitutions including conventional structures can be adopted for the carcass 24, and the carcass 24 may have a radial structure or a bias structure. The carcass 24 is preferably constituted by one or two carcass plys each composed of a steel cord layer. Further, the carcass 24 may have its maximum width positions in the tire radial direction on either side closer to each bead portion 23 or closer to the tread portion 21. For example, the maximum width positions of the carcass 24 can be arranged in a range of 50% to 90% from the bead base on the tire radial direction outer side with respect to the tire height. Moreover, as illustrated, the carcass 24 generally and preferably has a structure in which the carcass 24 extends between the pair of the bead cores 25 without interruption; however, the carcass 24 can also be constituted by a pair of carcass pieces that extend from the respective bead cores 25 and are interrupted in the vicinity of the tread portion 21.

A variety of structures can be adopted for the folded parts of the carcass 24. For example, the folded ends of the carcass 24 can be positioned on the tire radial direction inner side than the upper ends of bead fillers 26, and the carcass folded ends may extend further on the tire radial direction outer side than the upper ends of the bead fillers 26 or the tire maximum width positions. In this case, the folded ends of the carcass 24 may also extend to the tire width direction inner side than the tire width direction ends of a belt 27. Further, in cases where plural carcass plys are arranged, the positions of the folded ends of the carcass 24 in the tire radial direction may be different from each other. Alternatively, the carcass 24 can also take a structure in which the carcass 24 is sandwiched by plural bead core members in the absence of the folded parts, or a structure in which the carcass 24 is wound around the bead cores 25. The end count of the carcass 24 is generally in a range of 10 to 60 cords/50 mm; however, the end count is not restricted thereto.

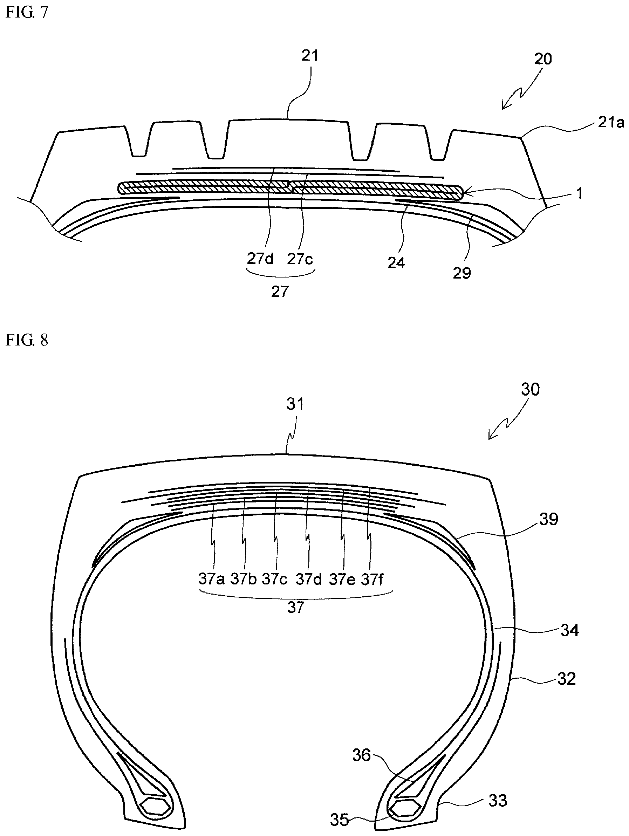

In the illustrated tire for trucks and busses 20, the belt 27 composed of four belt layers 27a to 27d is arranged on the tire radial direction outer side of the carcass 24 in a crown region. In the present invention, the reinforcement member 1 can be arranged in place of, among the four belt layers 27a to 27d, the first belt layer 27a and the second belt layer 27b positioned on the tire radial direction inner side, or the second belt layer 27b and the third belt layer 27c forming a middle layer. FIG. 7 is a tire widthwise partial cross-sectional view illustrating one example of a constitution of a tire for trucks and busses according to the present invention.

The tire for trucks and busses 20 of the present invention may further comprise, as illustrated, other belt layers (the third and the fourth belt layers in the illustrated example) in addition to the belt layers composed of the reinforcement member of the present invention. Such other belt layers can be inclined belts, each composed of a rubberized layer of reinforcing cords, having a prescribed angle with respect to the tire circumferential direction. As the reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, in cases where such other belt layers are arranged, the width of a maximum width inclined belt layer having the largest width is preferably 65% to 100%, particularly preferably 70% to 95%, of the tread width. On the tire radial direction inner side of each end of the belt 27, it is preferred to arrange a belt under-cushion rubber 29. By this, the strain and temperature of the ends of the belt 27 are reduced, so that the tire durability can be improved.

Further, in the tire for trucks and busses 20 of the present invention, on the tire radial direction outer side of the reinforcement member 1 of the present invention and other belt layers, a circumferential cord layer (not illustrated) may be arranged as well.

In the tire for trucks and busses 20 of the present invention, a known structure can be adopted also for the side wall portions 22. For example, the tire maximum width positions can be arranged in a range of 50% to 90% from the bead base on the tire radial direction outer side with respect to the tire height. In the tire for trucks and busses 20 of the present invention, it is prefarable that, unlike the tire for passenger vehicles, the side wall portions 22 are each formed as a smooth curve having a convex shape in the tire width direction without a recess for connecting with a rim flange.

Moreover, a variety of structures, such as a circular shape or a polygonal shape, can be adopted for the bead cores 25. It is noted here that, as described above, the bead portions 23 may have a structure in which the carcass 24 is wound on the bead cores 25, or a structure in which the carcass 24 is sandwiched by plural bead core members. In the illustrated tire for trucks and busses 20, bead fillers 26 are arranged on the tire radial direction outer side of the respective bead cores 25, and the bead fillers 26 may each be constituted by plural rubber members separated from each other in the tire radial direction.

In the tire for trucks and busses 20 of the present invention, the tread pattern may be a pattern mainly constituted by rib-like land portions, a block pattern or an asymmetrical pattern, and the tread pattern may have a designated rotation direction.

The pattern mainly constituted by rib-like land portions is a pattern mainly constituted by rib-like land portions partitioned in the tire width direction by at least one circumferential groove, or by circumferential grooves and tread ends. The term "rib-like land portions" used herein refers to land portions extending in the tire circumferential direction without any lateral groove across the tire width direction; however, the rib-like land portions may have sipes and lateral grooves terminating within each rib-like land portion. Since a radial tire has a high ground contact pressure particularly when used at a high internal pressure, it is believed that the ground contact performance on wet road is improved by increasing the circumferential shear rigidity. The pattern mainly constituted by rib-like land portions can be, for example, a tread pattern in which a region corresponding to 80% of the tread width centered on the equatorial plane consists of only rib-like land portions, that is, a pattern having no lateral groove. Such a pattern largely contributes to a drainage performance, particularly, to a wet performance in this region.

The block pattern is a pattern comprising block land portions partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and outer side in the vehicle mounting direction divided by the equatorial plane, and the tire may be configured to have different numbers of circumferential grooves between the tire halves on the inner side and outer side in the vehicle mounting direction divided by the equatorial plane.

The tread rubber is not particularly restricted, and any conventionally used rubber can be used. The tread rubber may be constituted by plural rubber layers different from each other in the tire radial direction, and the tread rubber may have, for example, a so-called cap-base structure. As the plural rubber layers, those different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers different from each other in the tire width direction, and the tread rubber may have a so-called divided tread structure. As the plural rubber layers, those different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the vicinity of the shoulder land portions or only the vicinity of the center land portions, may be constituted by a rubber layer(s) different from the surroundings. Further, in the tread portion, it is preferred that a corner 21a is formed at each tire width direction end.

Next, a tire for construction vehicles according to the present invention will be described.

FIG. 8 is a tire widthwise cross-sectional view illustrating one example of a constitution of a tire for construction vehicles. The illustrated tire for construction vehicles 30 comprises: a tread portion 31 forming a ground contact part; a pair of side wall portions 32 continuously extending inward in the tire radial direction on both sides of the tread portion 31; and bead portions 33 continuously extending on the circumferential inner side of each side wall portion 32. The tread portion 31, the side wall portions 32 and the bead portions 33 are reinforced by a carcass 34 composed of a single carcass ply toroidally extending from one bead portion 33 to the other bead portion 33. In the illustrated tire for construction vehicles 30, bead cores 35 are each embedded in the pair of the bead portions 33, and the carcass 34 is folded around the bead cores 35 from the inside to the outside of the tire and thereby anchored.

In the tire for construction vehicles according to the present invention, a variety of constitutions including conventional structures can be adopted for the carcass 34, and the carcass 34 may have a radial structure or a bias structure. The carcass 34 is preferably constituted by one or two carcass plys each composed of a steel cord layer. Further, the carcass 34 may have its maximum width positions in the tire radial direction on either side closer to each bead portion 33 or closer to the tread portion 31. For example, the maximum width positions of the carcass 34 can be arranged in a range of 50% to 90% from the bead base on the tire radial direction outer side with respect to the tire height. Moreover, as illustrated, the carcass 34 generally and preferably has a structure in which the carcass 34 extends between the pair of the bead cores 35 without interruption; however, the carcass 34 can also be constituted by a pair of carcass pieces extending from the respective bead cores 35 and being interrupted in the vicinity of the tread portion 31.

A variety of structures can be adopted for the folded parts of the carcass 34. For example, the folded ends of the carcass 34 can be positioned on the tire radial direction inner side than the upper ends of bead fillers 36, and the folded ends of the carcass 34 may extend further on the tire radial direction outer side than the upper ends of the bead fillers 36 or the tire maximum width positions. In this case, the folded ends of the carcass 34 may also extend to the tire width direction inner side than the tire width direction ends of a belt 37. Further, in cases where plural carcass plys are arranged, the positions of the folded ends of the carcass 34 in the tire radial direction may be different from each other. Alternatively, the carcass 34 can also take a structure in which the carcass 34 is sandwiched by plural bead core members in the absence of the folded parts, or a structure in which the carcass 34 is wound around the bead cores 35. The end count of the carcass 34 is generally in a range of 10 to 60 cords/50 mm; however, the end count is not restricted thereto.

In the illustrated tire for construction vehicles 30, the belt 37 composed of six belt layers 37a to 37f is arranged on the tire radial direction outer side of the carcass 34 in a crown region. Generally, a tire for construction vehicles comprises 4 to 6 belt layers and, when the tire for construction vehicles comprises 6 belt layers, the first and the second belt layers 37a and 37b constitute an inner intersecting belt layer group; the third and the fourth belt layers 37c and 37d constitute a middle intersecting belt layer group; and the fifth and the sixth belt layers 37e and 37f constitute an outer intersecting belt layer group. The tire for construction vehicles according to the present invention has a structure in which at least one of the inner, middle and outer intersecting belt layer groups is replaced with the reinforcement member of the present invention. In the tread width direction, the width of the inner intersecting belt layer group can be 25% to 70% of the width of the tread surface; the width of the middle intersecting belt layer group can be 55% to 90% of the width of the tread surface; and the width of the outer intersecting belt layer group can be 60% to 110% of the width of the tread surface. Further, in the tread planar view, the inclination angle of the belt cords of the inner intersecting belt layer group can be 70° to 85° with respect to the carcass cords; the inclination angle of the belt cords of the middle intersecting belt layer group can be 50° to 75° with respect to the carcass cords; and the inclination angle of the belt cords of the outer intersecting belt layer group can be 50° to 85° with respect to the carcass cords.

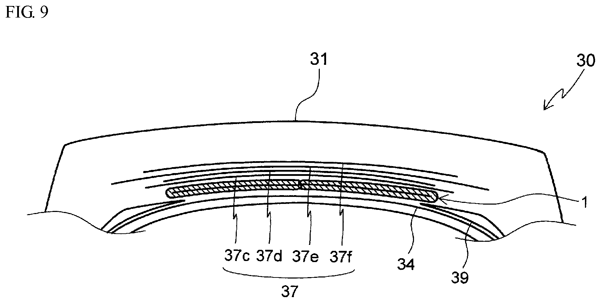

FIG. 9 is a tire widthwise partial cross-sectional view illustrating one example of a constitution of a tire for construction vehicles according to the present invention. In the illustrated tire for construction vehicles 30, the reinforcement member 1 of the present invention is arranged in place of the first belt layer 37a and the second belt layer 37b constituting the inner intersecting belt layer group. That is, the reinforcement member 1 of the present invention constitutes intersecting belts in which cord layers each having a prescribed angle with respect to the tire circumferential direction intersect with each other between the layers. In the illustrated example, the inner intersecting belt layer group is replaced with the reinforcement member 1 of the present invention; however, the tire for construction vehicles according to the present invention is not restricted thereto. The middle intersecting belt layer group may be replaced with the reinforcement member 1 of the present invention, or the outer intersecting belt layer group may be replaced with the reinforcement member 1 of the present invention. In the case of a tire for construction vehicles comprising 4 belt layers, the first and the second belt layers may be replaced with the reinforcement member of the present invention, or the third and the fourth belt layers may be replaced with the reinforcement member of the present invention.

The tire for construction vehicles 30 of the present invention may further comprise, as illustrated, other belt layers (the fourth to the sixth belt layers) in addition to the belt layers composed of the reinforcement member 1 of the present invention. Such other belt layers can be inclined belts, each composed of a rubberized layer of reinforcing cords, having a prescribed angle with respect to the tire circumferential direction. As the reinforcing cords of the inclined belt layers, it is most common to use, for example, metal cords, particularly steel cords; however, organic fiber cords may be used as well. As the steel cords, such cords cn be used that are composed of steel filaments containing iron as a main component along with various trace elements, such as carbon, manganese, silicon, phosphorus, sulfur, copper and chromium.

As the steel cords, in addition to those cords obtained by twisting plural filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 0° or larger with respect to the tire circumferential direction. Moreover, in cases where such other belt layers are arranged, the width of a maximum width inclined belt layer having the largest width is preferably 65% to 100%, particularly preferably 70% to 95%, of the tread width. On the tire radial direction inner side of each end of the belt 37, it is preferred to arrange a belt under-cushion rubber 39. By this, the strain and temperature of the ends of the belt 37 are reduced, so that the tire durability can be improved.

In the tire for construction vehicles 30 of the present invention, a known structure can be adopted also for the side wall portions 32. For example, the tire maximum width positions can be arranged in a range of 50% to 90% from the bead base on the tire radial direction outer side with respect to the tire height. In the tire for construction vehicles 30 of the present invention, it is preferred that a recess for connecting with a rim flange is formed in the side wall portions 32.

Moreover, a variety of structures, such as a circular shape or a polygonal shape, can be adopted for the bead cores 35. It is noted here that, as described above, the bead portions 33 may have a structure in which the carcass 34 is wound on the bead cores 35, or a structure in which the carcass 34 is sandwiched by plural bead core members. In the illustrated tire for construction vehicles 30, bead fillers 36 are arranged on the tire radial direction outer side of the respective bead cores 35, and the bead fillers 36 may each be constituted by plural rubber members separated from each other in the tire radial direction.

In the tire for construction vehicles 30 of the present invention, the tread pattern may be a lug pattern, a block pattern or an asymmetrical pattern, and the tread pattern may have a designated rotation direction.

The lug pattern may be a pattern comprising widthwise grooves extending in the tire width direction from the vicinity of the equatorial plane to the ground contact ends and, in this case, the pattern is not required to have a circumferential groove.

The block pattern is a pattern comprising block land portions partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and outer side in the vehicle mounting direction divided by the equatorial plane, and the tire may be configured to have different numbers of circumferential grooves between the tire halves on the inner side and outer side in the vehicle mounting direction divided by the equatorial plane.

The tread rubber is not particularly restricted, and any conventionally used rubber can be used. The tread rubber may be constituted by plural rubber layers different from each other in the tire radial direction, and the tread rubber may have, for example, a so-called cap-base structure. As the plural rubber layers, those different from each other in terms of loss tangent, modulus, hardness, glass transition temperature, material and the like can be used. The thickness ratio of the plural rubber layers in the tire radial direction may vary along the tire width direction and, for example, only the bottom of the circumferential grooves may be constituted by a rubber layer(s) different from the surroundings.

Alternatively, the tread rubber may be constituted by plural rubber layers different from each other in the tire width direction, and the tread rubber may have a so-called divided tread structure. As the plural rubber layers, those different from each other in terms of loss tangent, modulus, hardness, glass transition temperature, material and the like can be used. The length ratio of the plural rubber layers in the tire width direction may vary along the tire radial direction, and only a limited region, such as only the vicinity of the circumferential grooves, only the vicinity of the tread ends, only the vicinity of the shoulder land portions or only the vicinity of the center land portions, may be constituted by a rubber layer(s) different from the surroundings.

In the tire for construction vehicles 30, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground contact surface of the tread portion 31 (negative ratio) is preferably not higher than 20%. The reason for this is because the tire for construction vehicles 30 is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

### (Example 1)

A 100 mm wide tire reinforcement member having two reinforcing layers with different inclination directions was prepared by winding a rubber strip (end count = 38 cords/50 mm) composed of 6 paralleled rubber coated reinforcing cords (carbon fiber cords, cord diameter = 4,000 dtex/3), at an inclination of ±20° with respect to the longitudinal direction of the member without any gaps while folding back the rubber strip at width direction ends of the member. In this reinforcement member, as illustrated in FIG. 1, the rubber strip was passed under an already wound rubber strip and then folded at the folding part closest to a winding finish end of the rubber strip, the already wound rubber strip has been wound previous to the rubber strip in an inclination direction different from that of the rubber strip.

Further, a pneumatic tire for passenger vehicles, which had a size of 155/65R13, was produced by arranging the thus obtained reinforcement member on the tire radial direction outer side of a carcass in a crown region.

### (Comparative Example 1)

A tire reinforcement member was prepared in the same manner as in Example 1 except that, as illustrated in FIG. 3, at the folding part closest to the winding finish end of the rubber strip, the rubber strip was folded without being passed under the already wound rubber strip which has been wound previous to the rubber strip in an inclination direction different from that of the rubber strip. Then, a pneumatic tire for passenger vehicles was also produced in the same manner as in Example 1 by arranging the thus obtained reinforcement member on the tire radial direction outer side of a carcass in the crown region.

### (Comparative Example 2)

A pneumatic tire for passenger vehicles was produced in the same manner as in Example 1, except that two intersecting inclined belts (end count = 34 cords/50 mm, width = 100 mm) each composed of a rubberized layer of steel cords (1 × 3 × 0.33 mmcp) were arranged in place of the above-described reinforcement member.

### <Tensile Fatigue Test>

The reinforcement members obtained in Example 1 and Comparative Example 1 were each subjected to a tensile fatigue test. As for the measurement, using a test fatigue tester, strains of 2% at the minimum and 3.3% at the maximum were repeatedly applied to each of the thus prepared reinforcement members having a longitudinal length of 600 mm, and the number of strains required for breaking the reinforcing cords was measured. The thus obtained results were indicated by index values, taking the value of Comparative Example 1 as 100. A larger value means superior tensile fatigue resistance. The results thereof are shown in Table 1.

### <Lightweightness>

The weight was measured for the tires obtained in Example 1 and Comparative Example 2 and indicated by an index value, taking the value of Comparative Example 2 as 100. A smaller index value means less weight. The results thereof are shown in Table 1.

### <Tire Durability Test>

The tires obtained in Example 1 and Comparative Example 1 were each mounted on an application rim, inflated to a prescribed internal pressure and made to run under a prescribed load at a speed of 60 km/h for a distance of 50,000 km. Thereafter, the tires were each dissected, and the presence or absence of breakage of the reinforcing cords in the reinforcement member was verified. The results thereof are shown in Table 1.

The term "application rim" used herein refers to a rim defined by an industrial standard that is valid in each region where the tire is manufactured and used, such as JATMA (Japan Automobile Tyre Manufacturers Association) Year Book in Japan, ETRTO (European Tyre and Rim Technical Organisation) Standard Manual in Europe, or TRA (The Tire and Rim Association Inc.) Year Book in the U.S.; the term "prescribed internal pressure" refers to an inner pressure (maximum air pressure) that corresponds to the tire maximum load capacity defined by a standard of JATMA or the like for a tire of an application size fitted to an application rim; and the term "prescribed load" refers to the maximum mass that is allowable on the tire under the above-described standard.

**[Table 1]**

| | Tensile fatigue test (index) | Lightweightness (index) | Tire durability (presence or absence of cord breakage) |
|---|---|---|---|
| Example 1 | 523 | 90 | absent |
| Comparative Example 1 | 100 | - | present |
| Comparative Example 2 | - | 100 | - |

As shown in Table 1 above, in Example 1 according to the present invention, it was confirmed that the reinforcement member had excellent durability and, when it was applied to a tire, both lightweightness and durability were attained in a favorable manner.

### DESCRIPTION OF SYMBOLS

1, 100: tire reinforcement member
2: rubber strip
2A: already wound rubber strip
2e: winding finish end of rubber strip
2s: width direction edge on the trailing side of the winding direction of the rubber strip
T: folding part
10: tire for passenger vehicles
11, 21, 31: tread portion
12, 22, 32: sidewall portion
13, 23, 33: bead portion
13a: recess
14, 24, 34: carcass
15, 25, 35: bead core
16, 26, 36: bead filler
17, 27, 37: belt
17a, 17b, 27a to 27d, 37a to 37f: belt layer
18: belt reinforcing layer
18a: cap layer
18b: layered layer
20: tire for trucks and busses
21a: corner
29, 39: belt under-cushion rubber
30: tire for construction vehicles

## Claims

1. A tire reinforcement member (1) formed by winding a rubber strip (2) without any gaps at an inclination with respect to the longitudinal direction of said member while folding said rubber strip at width direction ends of said member, said rubber strip (2) being obtained by rubber-coating one reinforcing cord or a plurality of paralleled reinforcing cords, wherein
said rubber strip (2) substantially forms two reinforcing layers having different inclination directions, **characterised in that**:
said rubber strip (2) is passed under an already wound rubber strip (2A) and then folded at a folding part (T) closest to a winding finish end (2e) of said rubber strip (2), said already wound rubber strip (2A) has been wound previous to said rubber strip (2) in an inclination direction different from that of said rubber strip (2).

2. A tire (10, 20, 30) comprising the tire reinforcement member (1) according to claim 1.

3. The tire (10) according to claim 2, said tire (10) is for passenger vehicles.

4. The tire (20) according to claim 2, said tire (20) is for trucks and busses.

5. The tire (30) according to claim 2, said tire (30) is for construction vehicles.

## Patentansprüche

1. Reifenverstärkungselement (1) welches durch Wickeln eines Gummistreifens (2) ohne irgendwelche Spalte bei einer Neigung bezüglich der Längsrichtung des Elements gebildet wird, während der Gummistreifen an den Enden in Breitenrichtung des Elements gefaltet wird, wobei der Gummistreifen (2) durch Gummibeschichten eines Verstärkungskords oder einer Vielzahl an parallelen Verstärkungskords erhalten wird, wobei der Gummistreifen (2) im Wesentlichen zwei Verstärkungsschichten mit verschiedenen Neigungsrichtungen bildet, **dadurch gekennzeichnet, dass**
der Gummistreifen (2) unter einen schon gewickelten Gummistreifen (2A) geführt wird und anschließend an einem Faltungsteil (T), welches sich am nächsten zu einem Wicklungsabschlussende (2e) des Gummistreifens (2) befindet, gefaltet wird, wobei der schon gewickelte Gummistreifen (2A) vor dem Gummistreifen (2) in einer anderen Neigungsrichtung als die des Gummistreifens (2) gewickelt wurde.

2. Reifen (10, 20, 30) umfassend das Reifenverstärkungselement (1) nach Anspruch 1.

3. Reifen (10) nach Anspruch 2, wobei der Reifen (10) für Passagierfahrzeuge ist.

4. Reifen (20) nach Anspruch 2, wobei der Reifen (20) für Lastkraftwagen und Busse ist.

5. Reifen (30) nach Anspruch 2, wobei der Reifen (30) für Baufahrzeuge ist.

## Revendications

1. Elément de renforcement de pneu (1) formé en enroulant une bande de caoutchouc (2) sans espace vide en inclinaison par rapport à la direction longitudinale dudit élément tout en pliant ladite bande de caoutchouc aux extrémités dans le sens de la largeur dudit élément, ladite bande de caoutchouc (2) étant obtenue par revêtement en caoutchouc d'un câble de renforcement ou de plusieurs câbles de renforcement en parallèle, dans lequel ladite bande de caoutchouc (2) forme sensiblement deux couches de renforcement ayant des directions d'inclinaison différentes, **caractérisé en ce que**:
ladite bande de caoutchouc (2) est passée sous une bande de caoutchouc déjà enroulée (2A) puis pliée au niveau d'une partie de pliage (T) la plus proche d'une extrémité de finissage enroulée (2e) de ladite bande de caoutchouc (2), ladite bande de caoutchouc déjà enroulée (2A) a été enroulée avant ladite bande de caoutchouc (2) dans une direction d'inclinaison différente de celle de ladite bande de caoutchouc (2).

2. Pneumatique (10, 20, 30) comprenant l'élément de renforcement de pneumatique (1) selon la revendication 1.

3. Pneumatique (10) selon la revendication 2, ledit pneumatique (10) étant destiné aux véhicules de tourisme.

4. Pneumatique (20) selon la revendication 2, ledit pneumatique (20) étant destiné aux camions et aux bus.

5. Pneumatique (30) selon la revendication 2, ledit pneumatique (30) étant destiné à des véhicules de construction.
